# EUROPÄISCHE PATENTSCHRIFT

(11) **EP 3 152 067 B1**
(45) Veröffentlichungstag und Bekanntmachung des Hinweises auf die Patenterteilung: **24.10.2018**
(21) Anmeldenummer: 15711778.9
(22) Anmeldetag: 25.03.2015
(51) Int. Cl.: B60C 11/03, B60C 11/12

(54) **FAHRZEUGLUFTREIFEN**
VEHICLE TYRES
PNEUMATIQUE DE VÉHICULE

(30) Priorität: 06.06.2014 DE 102014210823
(43) Veröffentlichungstag der Anmeldung: 12.04.2017
(73) Patentinhaber: Continental Reifen Deutschland GmbH, 30165 Hannover (DE)
(72) Erfinder: SENG, Matthias, 30453 Hannover (DE); BROCKMANN, Jürgen, 30171 Hannover (DE)
(74) Vertreter: Finger, Karsten
(86) Internationale Anmeldenummer: PCT/EP2015/056319
(87) Internationale Veröffentlichungsnummer: WO 2015/185236

(56) Entgegenhaltungen:
- FR-A1- 2 548 097
- JP-A- H02 310 108
- JP-A- S62 241 712

## Beschreibung

Die Erfindung betrifft einen Fahrzeugluftreifen, insbesondere für den Einsatz unter winterlichen Fahrbedingungen, mit einem Laufstreifen mit durch Nuten, beispielsweise in Umfangsrichtung verlaufende Umfangsnuten, durch Quernuten, Schrägnuten und dergleichen, voneinander getrennten Profilpositiven, beispielsweise Profilblöcken oder Laufstreifenbändern, in welchen die Profilpositive durchquerende, von zwei Einschnittwänden begrenzte Einschnitte ausgebildet sind, deren Erstreckungsrichtung um höchsten 45° von der axialen Richtung abweicht und welche jeweils mittels zumindest eines Kanals lokal verbreitert sind, der eine Verbindung zwischen der Profilaußenseite und einer Nut herstellt, wobei der Einschnitt in seinen Bereichen außerhalb des Kanals eine Breite von 0,4 mm bis 1,0 mm aufweist.

Ein derartiger Fahrzeugluftreifen ist beispielsweise aus der JP A-02 310 108 bekannt. Der Laufstreifen dieses Fahrzeugluftreifens weist durch Kanäle verbreitete Einschnitte auf, wobei die Kanäle zumindest mit einem ihrer Enden in eine Nut münden und einen kreisförmigen Querschnitt aufweisen. Diese Kanäle sollen die Ableitung von Wasser in die Nuten unterstützen.

Ein weiterer Fahrzeugluftreifen der eingangs genannten Art ist beispielsweise aus der EP 0 625 436 A1 bekannt. Der einerends an der Profiloberfläche und anderends in einer Nut nach außen mündende Kanal weist einen kreisförmigen Querschnitt mit einem Durchmesser von 2 mm bis 8 mm auf. Dieser Kanal soll vor allem eine Luftableitung bewirken, um den sogenannten Airpumping-Effekt zu reduzieren, welcher darin besteht, dass durch Profilblockdeformationen beim Eintreten in den Untergrund und beim Austreten aus dem Untergrund Luft in den Umfangs- und Quernuten komprimiert wird. Erwähnt ist ferner, dass solche Kanäle auch das Wasserableitvermögen des Laufstreifens erhöhen können. Aus der US 2011/0277898 A1 ist ein Fahrzeugluftreifen mit einem Laufstreifen bekannt, der in seinem Inneren Hohlräume aufweist, die mit fortschreitendem Abrieb als Nuten, beispielsweise als Umfangsnuten oder als Einschnitte, zutage treten. Diese Hohlräume sollen derart ausgeführt sein, dass über die Lebensdauer des Reifens die erwünschten Eigenschaften des Laufstreifens gleichermaßen gut erhalten bleiben können, beispielsweise die Griffeigenschaften, die Abriebeigenschaften und der Rollwiderstand. Auch die US 2011/0168311 A1 befasst sich
mit einem Laufstreifen, der durch besonders ausgestaltete Hohlräume in seinem Inneren mit zunehmendem Abrieb seine äußere Profilierung ändert. Aus der EP 1 033 267 B1 ist ein Fahrzeugluftreifen bekannt, dessen Laufstreifen Profilblöcke aufweist, welche jeweils mit einem Wasserablaufkanal versehen sind. Dieser Wasserablaufkanal ist ein Einschnitt, der innerhalb des Profilblockes ausgeformt ist und zwei Enden aufweist, von denen sich das eine in der Außenfläche des Profilelementes öffnet und in Reifenquerrichtung verlängert ist und das andere bei einer Seitenfläche des Profilblockes öffnet, die zu einer Nut weist, die sich in Reifenquerrichtung erstreckt. Derartige Kanäle sollen eine bessere Wasserableitung gewährleisten, ohne die Blocksteifigkeit zu beeinträchtigen.

Darüber hinaus ist es, beispielsweise aus der DE 10 2012 104 403 A1, bekannt, in Profilblöcken eines Laufstreifens eines Fahrzeugluftreifens Einschnitte auszubilden, deren Einschnittwände eine Vielzahl von Ausbuchtungen aufweisen, welche das Volumen des Einschnittes an der Stelle der Ausbuchtung erhöhen und in axialer Richtung sowie in radialer Richtung verteilt an den Einschnittwänden angeordnet sind.

Beim Einsatz von Reifen unter winterlichen Fahrbedingungen, beispielsweise auf mit Eis bedeckten Fahrbahnen, wird durch die Reibenergie zwischen dem Laufstreifen des Reifens und dem Eis ein Schmelzwasserfilm, ein "Liquid Layer", erzeugt, der durch Profilelementkanten, insbesondere die Blockkanten bei Quernuten oder Einschnitten, zum Großteil weggewischt wird, sodass auch ein Großteil der Oberfläche der Profilpositive, beispielsweise der Profilblöcke, in direkten Reibkontakt mit dem Untergrund kommt. Das Volumen des wegzuwischenden "Liquid Layers" ist von diversen Faktoren, insbesondere den Umgebungstemperaturen, wie Eistemperatur, Reifentemperatur und Lufttemperatur, sowie von der eingebrachten Reibenergie abhängig und ist daher bei Temperaturen um den Gefrierpunkt am größten. Zur Sicherstellung eines optimalen Reibkontaktes zwischen dem Laufstreifen und dem Untergrund sollte möglichst viel des Schmelzwassers von den Einschnitten aufgenommen bzw. abgeleitet werden, wobei jedoch die Größe der Kontaktfläche der Profilelemente bzw. Profilblöcke zum Untergrund möglichst groß bleiben soll. Bei angehoben ausgeführten Einschnitten mit Randabschnitten, die relativ seicht sind, kann überhaupt sehr wenig Schmelzwasser zur Seite über den Einschnitt abfließen.

Der Erfindung liegt somit die Aufgabe zugrunde, einen Reifen der eingangs genannten Art diesbezüglich zu optimieren.

Gelöst wird die gestellte Aufgabe erfindungsgemäß dadurch, dass der Einschnitt einen mittleren Abschnitt mit einer Tiefe von mindestens 70 % der Profiltiefe und zwei seichtere Randabschnitte unterschiedlicher Tiefen aufweist, und dass der Kanal bzw. die Kanäle, die an der Profilaußenseite nach außen mündet bzw. münden, eine maximale Breite aufweist bzw. aufweisen, die das Zwei- bis Dreifache der Einschnittbreite beträgt, wobei mit diesem Kanal bzw. diesen Kanälen ein Kanal verbunden ist, der am tieferen Randabschnitt des Einschnittes in die Umfangsnut mündet, wobei im Randabschnitt die Kanalunterkante mit dem Einschnittgrund zusammenfällt.

Mit erfindungsgemäß ausgeführten Einschnitten wird eine zusätzliche Verbindung von der Profilaußenseite zu den Umfangsnuten hergestellt, welche ausreicht, den "Liquid Layer" bzw. das Schmelzwasser auch bei einem Verformen der einzelnen Profilpositivelemente sicher abzuleiten. Im Bereich des jeweiligen Kanals bleibt der Einschnitt für ein Eindringen des Schmelzwassers ausreichend geöffnet. Darüber hinaus hat der Kanal bzw. haben die Kanäle keine nennenswerten Auswirkungen auf die Größe der Positivfläche, die Kontaktfläche der Profilelemente zum Untergrund bleibt nahezu unverändert erhalten.

Bei Ausführungen der Erfindung, bei denen mehr als ein Kanal an der Profilaußenseite nach außen mündet, ist es von Vorteil, wenn der am tieferen Randabschnitt des Einschnittes in die Umfangsnut mündende Kanal eine maximale Breite aufweist, die bis zum Fünffachen der Einschnittbreite beträgt. Diese Maßnahme ist für eine optimale Entwässerung der Kanäle in die Umfangsnut von Vorteil. Bei Profilpositiven, die insbesondere infolge ihrer äußeren Abmessungen Einschnitte mit einer größeren Erstreckung aufweisen, ist es vorteilhaft, wenn bis zu drei an der Profilaußenseite nach außen mündende Kanäle vorgesehen sind. Durch diese Maßnahme wird eine gute Ableitung des sich bildenden Liquid Layers auch bei größeren Profilpositiven bzw. Einschnitten mit größerer Erstreckung gewährleistet.

Die an der Profilaußenseite nach außen mündenden Kanäle verlaufen bevorzugt in radialer Richtung, sie können jedoch auch unter einem spitzen Winkel von insbesondere bis zu 35° zur radialen Richtung verlaufen. Die radiale Erstreckung ist jedoch bevorzugt, um auch bei zunehmendem Abrieb des Laufstreifens gleichermaßen eine Aufnahme und Ableitung des Schmelzwassers durch die Kanäle sicherzustellen.

Bei einer bevorzugten Ausführungsform der Erfindung verläuft der im Wesentlichen parallel zur Profilaußenseite verlaufende Kanal auch im mittleren Abschnitt des Einschnittes entlang des Einschnittgrundes und insbesondere entlang der gesamten Länge des Einschnittgrundes in diesem Abschnitt. Diese Ausführung gewährleistet eine optimale Entwässerung des Liquid Layers über die Lebensdauer des Reifens bzw. bei zunehmenden Abrieb des Laufstreifens.

Für eine gleichmäßige Steifigkeit der Profilpositive ist es vorteilhaft, wenn die innerhalb eines Profilpositives verlaufenden Einschnitte abwechselnd mit ihren tiefen und mit ihren seichten Randabschnitten in die Umfangsnuten münden. Dabei können von den innerhalb eines Profilpositives verlaufenden Einschnitten auch zumindest zwei einander benachbart verlaufende Einschnitte mit den gleichen Randabschnitten in die Umfangsnut münden.

Bei einer bevorzugten Ausführungsform der Erfindung sind die Kanäle von Rillen, die in den einander gegenüberliegenden Einschnittwänden verlaufen, ausgebildet. Bei einer alternativen Ausführungsform können die Kanäle auch von Rillen gebildet sein, die nur in einer der Einschnittwände ausgebildet sind. Bei einer weiteren Ausführungsvariante der Erfindung sind in den beiden Einschnittwänden Rillen ausgebildet, die jedoch in Erstreckungsrichtung des Einschnittes gegeneinander versetzt sind. Durch diese unterschiedlichen Maßnahmen kann auf Besonderheiten in der Ausgestaltung des Laufstreifenprofils, beispielsweise auf die Lage der Profilpositive - ob eher im mittleren Laufstreifenbereich oder in den schulterseitigen Laufstreifenbereichen - und dergleichen in Abstimmung mit den sonstigen erwünschten Eigenschaften des Laufstreifens Rücksicht genommen werden.

In diesem Zusammenhang ist es auch vorteilhaft, die Tiefe der Randabschnitte entsprechend abzustimmen. Dabei kann der eine Randabschnitt, welcher in eine größere Tiefe reicht, eine Tiefe aufweisen, die 50 % bis 90 % der maximalen Tiefe des Einschnittes beträgt, der andere, seichtere Randabschnitt kann bis in einer Tiefe reichen, die 10 % bis 60 % der maximalen Tiefe des Einschnittes beträgt.

Weitere Merkmale, Vorteile und Einzelheiten der Erfindung werden nun anhand der Zeichnung, die Ausführungsbeispiele darstellt, näher beschrieben. Dabei zeigt
Fig. 1 eine Ansicht von Profilblöcken eines Laufstreifens eines Fahrzeugluftreifens,
Fig. 2 einen Schnitt entlang der Linie II-II der Fig. 1,
Fig. 2a eine Variante der Fig. 2,
Fig. 3 eine Draufsicht auf einen der Profilblöcke aus Fig. 1,
Fig. 4 einen Schnitt entlang der Linie IV-IV der Fig. 3,
Fig. 5 einen Schnitt entlang der Linie V-V der Fig. 3 und
Fig. 6 und Fig. 7 Draufsichten auf Profilblöcke mit weiteren Ausführungsformen der Erfindung.

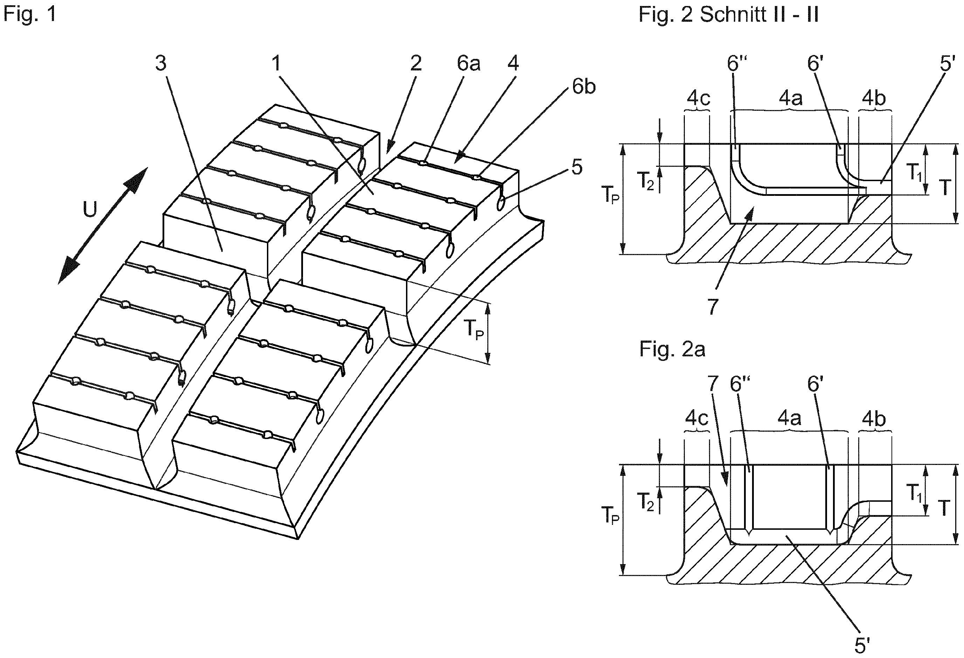

In Fig. 1 sind beispielhaft Ansichten auf Profilblöcke 1 eines Laufstreifens eines Fahrzeugluftreifens, insbesondere eines für den Einsatz unter winterlichen Fahrbedingungen geeigneten Reifens für Personenkraftwagen, Vans oder Schwerlastfahrzeuge, dargestellt. Die schematisch gezeigten Profilblöcke 1 gehören zu zwei in Umfangsrichtung, welche durch den Doppelpfeil U angedeutet ist, verlaufenden Blockreihen, welche durch eine Umfangsnut 2 voneinander getrennt sind und jeweils von weiteren, näher nicht bezeichneten Umfangsnuten begrenzt sein können. Innerhalb einer Blockreihe sind die Profilblöcke 1 voneinander durch Quernuten 3 getrennt. Jeder Profilblock 1 ist mit einer Anzahl von Einschnitten 4 versehen, welche, bis auf jene Bereiche, in denen, wie noch beschrieben wird, Kanäle 5, 6a, 6b verlaufen, eine vorzugsweise konstante Breite b aufweisen, die zwischen 0,4 mm und 1,0 mm, insbesondere bis zu 0,6 mm, beträgt. Bei der dargestellten Ausführungsform sind pro Profilblock 1 vier Einschnitte 4 vorgesehen, welche sich jeweils parallel zueinander und zu den Quernuten 3 erstrecken und deren gegenseitiger Abstand und deren Abstände zu den Quernuten 3 im Wesentlichen gleich groß sind. Die Einschnitte 4 gliedern die Profilblöcke 1 in Profiblockelemente 1a und weisen bei der gezeigten Ausführungsform einen geraden Verlauf auf.

Es wird darauf verwiesen, dass die Einschnitte je nach äußerer Blockform auch unter einem Winkel zu den Quernuten verlaufen können und dass sie nicht parallel zueinander und auch nicht exakt in Querrichtung verlaufen müssen, sondern ihre Erstreckungsrichtung um bis zu 45 ° von der Querrichtung abweichen kann.

Fig. 2 und Fig. 2a zeigen einen entlang eines Einschnittes 4 aufgeschnittenen Profilblock 1 und daher eine Ansicht auf die eine, den Einschnitt 4 begrenzende Einschnittwand 7. Die zweite, gegenüberliegende, gesondert nicht dargestellte Einschnittwand ist gemäß einer bevorzugten Ausführungsform der Erfindung spiegelbildlich (bezogen auf eine durch den Einschnitt 4 verlaufende Mittelebene) ausgeführt. Der Einschnitt 4 weist einen mittleren, insbesondere über mindestens 50 % der Einschnittlänge verlaufenden Abschnitt 4a auf, in welchem der Einschnitt 4 bis in eine Tiefe T reicht, die mindestens 70 % der Profiltiefe Tp (Fig. 1) beträgt, die der Tiefe der breiten Umfangsnuten 2 entspricht und bei PKW-Reifen sowie bei Van-Reifen in der Größenordnung von 7 mm bis 9 mm beträgt. An den mittleren Einschnittabschnitt 4a schließen über kurze Übergangsabschnitte, die nicht bezeichnet sind, seitlich Randabschnitte 4b und 4c an, welche eine geringere Tiefe T₁, T₂ aufweisen, welche 10 % bis 90 % der Tiefe T beträgt. Dabei reicht gemäß der dargestellten, bevorzugten Ausführungsform der Randabschnitt 4b in eine größere Tiefe T₁, die 50 % bis 90 % der Tiefe T beträgt, der Randabschnitt 4c reicht bis in die Tiefe T₂, die geringer ist als T₁ und 10 % bis 60 % der Tiefe T beträgt. Die Übergänge zwischen den Übergangsabschnitten und beiden Randabschnitten 4b, 4c sind, wie dargestellt, in an sich bekannter Weise gerundet ausgeführt. Die in einem Profilblock 1 in Umfangsrichtung aufeinander folgenden Einschnitte 4 sind ferner derart ausgeführt, dass sich abwechselnd ein tiefer und ein seichter Randabschnitt 4c, 4b bei der gleichen Umfangsnut 2 befinden. Dabei kann die Ausführung auch derart sein, dass zwei benachbart verlaufende Einschnitte 4 mit den gleichen Randabschnitten 4b, 4c in die Umfangsnut 2 münden.

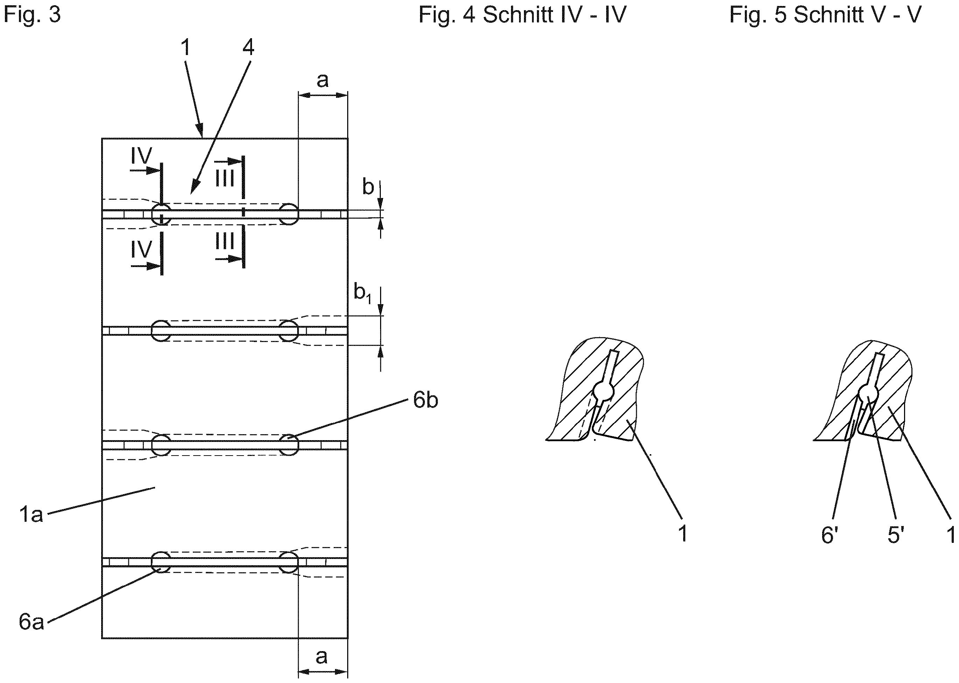

Bei der in Fig. 2 gezeigten Ausführung sind der Einschnittwand 7 Rillen 5', 6', 6" ausgebildet, wobei die Rille 5' im Wesentlichen in Querrichtung, zum Teil im mittleren Abschnitt 4a und zum Teil im Randabschnitt 4b verläuft, und in eine Umfangsnut 2 mündet, wobei die Rille 5' im Randabschnitt 4b entlang des Einschnittgrundes verläuft. Die Rille 5' ist ferner über die Rillen 6' und 6" mit der Profilblockaußenseite in Verbindung, wobei die Rille 6' zumindest im Wesentlichen in radialer Richtung verläuft und die Rille 6" in Fortsetzung der Rille 5' zuerst bogenförmig gekrümmt und dann ebenfalls in radialer Richtung zur Profilblockaußenseite verläuft. Der Rillenverlauf kann auch derart sein, dass die Rille 6' vorerst in Fortsetzung der Rille 5' in Querrichtung verläuft und über eine 90°-Biegung in einen in radialer Richtung verlaufenden Rillenabschnitt übergeht. Die Rillen 6', 6" verlaufen derart an der Profilblockaußenseite nach außen, dass ihr kleinster Abstand a (Fig. 3) zu der der Umfangsrichtung zugewandten Profilblockkante mindestens 3 mm beträgt. Bevorzugt ist eine Ausführungsform, bei der die Mündungsbereiche der Rillen 6', 6" den Einschnitt 4 in seiner Erstreckung im Wesentlichen dritteln. Bei einer weiteren, nicht dargestellten Ausführungsform kann auch lediglich eine Rille 6' vorgesehen sein, die bevorzugt mittig im Profilblock 1 nach außen mündet, es können auch bis zu drei Rillen vorgesehen sein, die vorzugsweise unter im Wesentlichen gleich großen Abständen an der Profilblockaußenseite nach außen münden.

Fig. 2a zeigt eine Variante der in Fig. 2 gezeigten Ausführungsform, bei der die Rille 5' auch im Abschnitt 4a und im Übergangsabschnitt zum Abschnitt 4b entlang des Einschnittgrundes verläuft. Die Rillen 6' und 6" verlaufen in radialer Richtung und münden in die Rille 5'.

Die in beiden Einschnittwänden 7 ausgebildeten Rillen 5', 6', 6" bilden gemeinsam die Kanäle 5, 6a, 6b, deren Querschnittsform unter Miteinbezug des Einschnittquerschnittes und bei unbelastetem Reifen insgesamt im Wesentlichen eine Kreisform ist. Im Bereich der Kanäle 6a, 6b beträgt die Einschnittbreite b₁ das Zwei- bis Dreifache der Einschnittbreite b, der Kanals 5 kann die gleiche Breite oder eine Breite aufweisen, die bis zum Fünffachen der Einschnittbreite b beträgt. Der Kanal 5, welcher in eine Umfangsnut 2 mündet, kann daher aus Rillen 5' gebildet sein, die tiefer und/oder breiter sind als die Rillen 6', 6", um einen entsprechend höheren Durchfluss von aus den Rillen 6', 6" kommendem Wasser zu ermöglichen. Der Kanal 5 weist insbesondere eine Querschnittsfläche auf, deren Größe im Wesentlichen der Summe der Querschnittsflächen der Kanäle 6a, 6b entspricht.

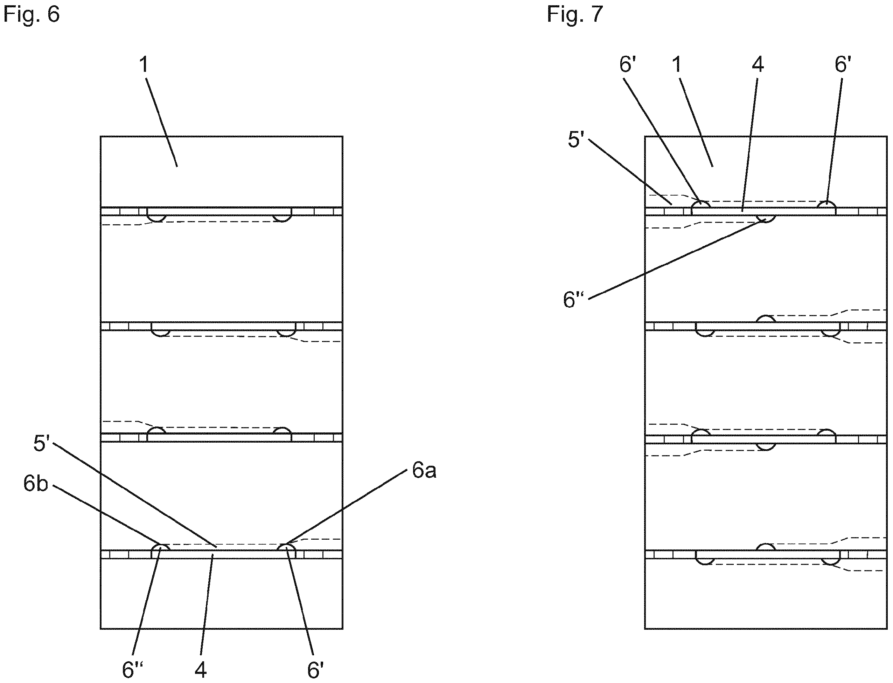

Bei einer weiteren, in Fig. 6 dargestellten Ausführungsform sind die Kanäle 5, 6a, 6b von lediglich in einer der beiden Einschnittwände angeordneten Rillen 5', 6', 6" gebildet, welche im Wesentlichen einen halbkreisförmigen Querschnitt aufweisen. Bezüglich der oben erwähnten Abmessungen bzw. Dimensionen gilt Analoges. Fig. 7 zeigt eine Abwandlung der in Fig. 6 dargestellten Variante, bei der in den einander gegenüber liegenden Einschnittwänden die Rillen 6' und 6" in der Erstreckungsrichtung des Einschnittes 4 gegeneinander versetzt sind.

Wie des Weiteren die Ausführungsformen gemäß Fig. 2 und 2a zeigen, mündet der Kanal 5 bevorzugt am tieferen Randabschnitt 4b nach außen, um ein in jedem Fall ausreichendes Wasserableitvermögen zu gewährleisten.

Fig. 4 und Fig. 5 zeigen die Wirkung der Erfindung. Werden Reifen bei winterlichen Straßenverhältnissen, insbesondere auf Eis, eingesetzt, so wird durch die Reibenergie zwischen der Eisschicht und dem Reifen ein Wasserfilm erzeugt, der durch die Profilelementquerkanten zum Großteil weggewischt wird, sodass zumindest ein Teil des nachfolgenden Profilelementes in direkten Reibkontakt mit dem eisigen Untergrund kommt. Ein Teil der gebildeten Wasserschicht kann nicht verdrängt werden und wird bei erfindungsgemäß ausgeführten Einschnitten 4 von den Kanälen 5, 6a, 6b vorerst aufgenommen und, falls ein gewisses Wasservolumen überschritten wird, mittels des Kanals 5 in die Umfangsnut 2, in welche der Kanal 5 mündet, geleitet. Dadurch wird ein höherer Reibwert der dem Einschnitt 4 benachbarten Profilblockelemente 1a auf eisigen Fahrbahnen, insbesondere bei Temperaturen nahe dem Gefrierpunkt, erzielt. Wie Fig. 5 zeigt, ist auch bei einem Schließen des Einschnittes 4 bei einer größeren Verformung der Profilblockelemente 1a ein Fließen von Wasser durch die Kanäle 5, 6a, 6b gewährleistet. Trotz ihrer relativ kleinen Abmessungen sind die gemäß der Erfindung vorgesehenen Kanäle 5, 6a, 6b sehr effektiv. Die kleinen Abmessungen haben zudem den Vorteil, dass die Positivfläche der Profilblöcke 1 durch die Kanäle 5, 6a, 6b nur unwesentlich verringert wird, d.h. die Kontaktfläche der Profilblöcke 1 zum Untergrund bleibt im Wesentlichen erhalten.

Die Erfindung ist auch in Laufstreifen anwendbar, die als Profilpositive Profilbänder aufweisen. Darüber hinaus können erfindungsgemäße Einschnitte in Draufsicht in Wellen- oder Zickzackform verlaufen, sie können ferner sogenannte 3D-Einschnitte sein, die beliebig gestaltete Einschnittwände aufweisen.

### Bezugsziffernliste

- 1: Profilblock
- 1a: Profilblockelement
- 2: Umfangsnut
- 3: Quernut
- 4: Einschnitt
- 4a: mittlerer Abschnitt
- 4b, 4c: Randabschnitt
- 5: Kanal
- 5': Rille
- 6a, 6b: Kanal
- 6', 6": Rille
- 7: Einschnittwand
- a: Abstand
- b, b₁, b₂: Einschnittbreite
- T: Tiefe
- T₁, T₂: Tiefe
- T_{P}: Profiltiefe

## Patentansprüche

1. Fahrzeugluftreifen, insbesondere für den Einsatz unter winterlichen Fahrbedingungen, mit einem Laufstreifen mit durch Nuten, beispielsweise in Umfangsrichtung verlaufende Umfangsnuten (2), durch Quernuten (3), Schrägnuten und dergleichen, voneinander getrennten Profilpositiven, beispielsweise Profilblöcken (1) oder Laufstreifenbändern, in welchen die Profilpositive durchquerende, von zwei Einschnittwänden (7) begrenzte Einschnitte (4) ausgebildet sind, deren Erstreckungsrichtung um höchsten 45° von der axialen Richtung abweicht und welche jeweils mittels zumindest eines Kanals (5, 6a, 6b) lokal verbreitert sind, der eine Verbindung zwischen der Profilaußenseite und einer Nut (2) herstellt, wobei der Einschnitt (4) in seinen Bereichen außerhalb des Kanals (5, 6a, 6b) eine Breite (b) von 0,4 mm bis 1,0 mm aufweist,
**dadurch gekennzeichnet,**
**dass** der Einschnitt (4) einen mittleren Abschnitt (4a) mit einer Tiefe (T) von mindestens 70 % der Profiltiefe (T_{P}) und zwei seichtere Randabschnitte (4b, 4c) unterschiedlicher Tiefen (T₁, T₂) aufweist, und dass der Kanal bzw. die Kanäle (6a, 6b), die an der Profilaußenseite nach außen mündet bzw. münden, eine maximale Breite aufweist bzw. aufweisen, die das Zwei- bis Dreifache der Einschnittbreite (b) beträgt, wobei mit diesem Kanal bzw. diesen Kanälen (6a, 6b) ein im Wesentlichen parallel zur Profilaußenseite verlaufender Kanal (5) verbunden ist, der am tieferen Randabschnitt (4b) des Einschnittes (4) in eine Umfangsnut (2) mündet, wobei im Randabschnitt (4b) die Kanalunterkante mit dem Einschnittgrund zusammenfällt.

2. Fahrzeugluftreifen nach Anspruch 1, **dadurch gekennzeichnet, dass** der am tieferen Randabschnitt (4b) des Einschnittes (4) in die Umfangsnut (2) mündende Kanal (5) eine maximale Breite aufweist, die bis zum Fünffachen der Einschnittbreite (b) beträgt.

3. Fahrzeugluftreifen nach Anspruch 1 oder 2, **dadurch gekennzeichnet, dass** mit dem am tieferen Randabschnitt (4b) des Einschnittes (4) in die Umfangsnut (2) mündende Kanal (5) bis zu drei an der Profilaußenseite nach außen mündende Kanäle (6) in Verbindung sind.

4. Fahrzeugluftreifen nach einem der Ansprüche 1 bis 3, **dadurch gekennzeichnet, dass** der bzw. die an der Profilaußenseite nach außen mündende(n) Kanal bzw. Kanäle (6a, 6b) zumindest abschnittsweise in radialer Richtung verläuft bzw. verlaufen.

5. Fahrzeugluftreifen nach einem der Ansprüche 1 bis 4, **dadurch gekennzeichnet, dass** der im Wesentlichen parallel zur Profilaußenseite verlaufende Kanal (5) auch im mittleren Abschnitt (4a) des Einschnittes (4) entlang des Einschnittgrundes verläuft.

6. Fahrzeugluftreifen nach Anspruch 5, **dadurch gekennzeichnet, dass** der Kanal (5) im mittleren Abschnitt (4a) des Einschnittes entlang der gesamten Länge des Einschnittgrundes in diesem Abschnitt (4a) verläuft.

7. Fahrzeugluftreifen nach einem der Ansprüche 1 bis 6, **dadurch gekennzeichnet, dass** die innerhalb eines Profilpositives verlaufenden Einschnitte (4) abwechselnd mit ihrem tiefen und ihrem seichten Randabschnitt (4b, 4c) in die Umfangsnuten (2) münden.

8. Fahrzeugluftreifen nach einem der Ansprüche 1 bis 7, **dadurch gekennzeichnet, dass** von den innerhalb eines Profilpositives verlaufenden Einschnitte (4) zumindest zwei benachbart verlaufende Einschnitte (4) mit den gleichen Randabschnitten (4b, 4c) in die Umfangsnut (2) münden.

9. Fahrzeugluftreifen nach einem der Ansprüche 1 bis 8, **dadurch gekennzeichnet, dass** die Kanäle (5, 6a, 6b) von Rillen (5', 6', 6") gebildet sind, die zumindest in einer der Einschnittwände (7) des Einschnittes (4) ausgebildet sind.

10. Fahrzeugluftreifen nach Anspruch 9, **dadurch gekennzeichnet, dass** in den einander gegenüber liegenden Einschnittwänden (7) die Rillen (6', 6") in der Erstreckungsrichtung des Einschnittes (4) gegeneinander versetzt sind.

11. Fahrzeugluftreifen nach einem der Ansprüche 1 bis 10, **dadurch gekennzeichnet, dass** der eine Randabschnitt (4b) bis in eine Tiefe (T₁) reicht, die 50 % bis 90 % der maximalen Tiefe (T) des Einschnittes (4) beträgt, und der andere Randabschnitt (4c) bis in die Tiefe (T₂) reicht, die 10 % bis 60 % er maximalen Tiefe (T) des Einschnittes (4) beträgt.

## Claims

1. Pneumatic vehicle tyre, in particular for use in winter driving conditions, comprising, a tread with profile positives, for example profile blocks (1) or tread bars, separated from one another by recesses, for example circumferential recesses (2) running in the circumferential direction, by transverse recesses (3), oblique recesses and the like, formed in which are sipes (4), which pass through the profile positives and are bordered by two sipe walls (7) and the direction of extent of which deviates from the axial direction by a maximum of 45°, and which are in each case locally widened by means of at least one channel (5, 6a, 6b), which establishes a connection between the outside of the profile and a recess (2), the sipe (4) having in its regions outside the channel (5, 6a, 6b) a width (b) of 0.4mm to 1.0 mm,
**characterized**
**in that** the sipe (4) has a middle portion (4a) with a depth (T) of at least 70% of the profile depth (T_{P}) and two shallower outer portions (4b, 4c) of different depths (T₁, T₂), and in that the channel or the channels (6a, 6b), which outwardly opens out or open out on the outside of the profile has or have a maximum width that is two to three times the width (b) of the sipe, there being connected to this channel or these channels (6a, 6b) a channel (5) that runs substantially parallel to the outside of the profile and at the deeper outer portion (4b) of the sipe (4) opens out into a circumferential recess (2), the lower edge of the channel coinciding with the base of the sipe in the outer portion (4b).

2. Pneumatic vehicle tyre according to Claim 1, **characterized in that** the channel (5) opening out into the circumferential recess (2) at the deeper outer portion (4b) of the sipe (4) has a maximum width that is up to five times the width (b) of the sipe.

3. Pneumatic vehicle tyre according to Claim 1 or 2, **characterized in that** up to three channels (6) outwardly opening out on the outside of the profile are in connection with the channel (5) opening out into the circumferential recess (2) at the deeper outer portion (4b) of the sipe (4).

4. Pneumatic vehicle tyre according to one of Claims 1 to 3, **characterized in that**, at least in certain portions, the channel or channels (6a, 6b) outwardly opening out on the outside of the profile runs or run in a radial direction.

5. Pneumatic vehicle tyre according to one of Claims 1 to 4, **characterized in that**, also in the middle portion (4a) of the sipe (4), the channel (5) running substantially parallel to the outside of the profile runs along the base of the sipe.

6. Pneumatic vehicle tyre according to Claim 5, **characterized in that**, in the middle portion (4a) of the sipe, the channel (5) runs along the entire length of the base of the sipe in this portion (4a).

7. Pneumatic vehicle tyre according to one of Claims 1 to 6, **characterized in that** the sipes (4) running within a profile positive open out into the circumferential recesses (2) alternately with their deep outer portion (4b) and their shallow outer portion (4c).

8. Pneumatic vehicle tyre according to one of Claims 1 to 7, **characterized in that**, of the sipes (4) running within a profile positive, at least two adjacently running sipes (4) open out into the circumferential recess (2) with the same outer portions (4b, 4c).

9. Pneumatic vehicle tyre according to one of Claims 1 to 8, **characterized in that** the channels (5, 6a, 6b) are formed by grooves (5', 6', 6"), which are formed at least in one of the sipe walls (7) of the sipe (4) .

10. Pneumatic vehicle tyre according to Claim 9, **characterized in that**, in the sipe walls (7) lying opposite one another, the grooves (6', 6") are offset with respect to one another in the direction of extent of the sipe (4).

11. Pneumatic vehicle tyre according to one of Claims 1 to 10, **characterized in that** the one outer portion (4b) reaches to a depth (T₁), which is 50% to 90% of the maximum depth (T) of the sipe (4), and the other outer portion (4c) reaches to the depth (T₂), which is 10% to 60% of the maximum depth (T) of the sipe (4) .

## Revendications

1. Pneumatique de véhicule, en particulier pour l'utilisation dans des conditions de conduite hivernales, comprenant une bande de roulement avec des parties profilées positives séparées les unes des autres par des rainures, par exemple des rainures périphériques (2) s'étendant dans la direction périphérique, par des rainures transversales (3), des rainures obliques et similaires, par exemple des blocs profilés (1) ou des rubans de bande de roulement dans lesquelles sont réalisées des entailles (4) traversant les parties profilées positives, limitées par deux parois d'entaille (7), dont la direction d'étendue s'écarte de la direction axiale de 45° maximum et qui sont localement élargies à chaque fois au moyen d'au moins un canal (5, 6a, 6b) qui constitue une liaison entre le côté extérieur du profilé et une rainure (2), l'entaille (4) présentant dans ses régions à l'extérieur du canal (5, 6a, 6b) une largeur (b) de 0,4 mm à 1,0 mm,
**caractérisé en ce que**
l'entaille (4) présente une portion centrale (4a) ayant une profondeur (T) d'au moins 70 % de la profondeur du profilé (T_{P}) et deux portions de bord moins profondes (4b, 4c) de profondeurs différentes (T₁, T₂), et **en ce que** le canal ou les canaux (6a, 6b), qui débouche (nt) au niveau du côté extérieur du profilé vers l'extérieur présente(nt) une largeur maximale qui représente deux à trois fois la largeur de l'entaille (b), un canal (5) s'étendant essentiellement parallèlement au côté extérieur du profilé étant connecté à ce canal ou à ces canaux (6a, 6b), lequel débouche dans une rainure périphérique (2) au niveau de la portion de bord plus profonde (4b) de l'entaille (4), l'arête inférieure du canal coïncidant avec le fond d'entaille dans la portion de bord (4b).

2. Pneumatique de véhicule selon la revendication 1, **caractérisé en ce que** le canal (5) débouchant dans la rainure périphérique (2) au niveau de la portion de bord plus profonde (4b) de l'entaille (4) présente une largeur maximale qui représente jusqu'à cinq fois la largeur de l'entaille (b).

3. Pneumatique de véhicule selon la revendication 1 ou 2, **caractérisé en ce que** jusqu'à trois canaux (6) débouchant vers l'extérieur au niveau du côté extérieur du profilé sont en liaison avec le canal (5) débouchant dans la rainure périphérique (2) au niveau de la portion de bord plus profonde (4b) de l'entaille (4).

4. Pneumatique de véhicule selon l'une quelconque des revendications 1 à 3, **caractérisé en ce que** le canal ou les canaux (6a, 6b) débouchant vers l'extérieur au niveau du côté extérieur du profilé s'étend ou s'étendent au moins en partie dans la direction radiale.

5. Pneumatique de véhicule selon l'une quelconque des revendications 1 à 4, **caractérisé en ce que** le canal (5) s'étendant essentiellement parallèlement au côté extérieur du profilé s'étend également dans la portion centrale (4a) de l'entaille (4) le long du fond d'entaille.

6. Pneumatique de véhicule selon la revendication 5, **caractérisé en ce que** le canal (5) s'étend dans la portion centrale (4a) de l'entaille le long de toute la longueur du fond d'entaille dans cette portion (4a).

7. Pneumatique de véhicule selon l'une quelconque des revendications 1 à 6, **caractérisé en ce que** les entailles (4) s'étendant à l'intérieur d'une partie profilée positive débouchent en alternance avec leur portion de bord profonde et leur portion de bord peu profonde (4b, 4c) dans les rainures périphériques (2).

8. Pneumatique de véhicule selon l'une quelconque des revendications 1 à 7, **caractérisé en ce que** parmi les entailles (4) s'étendant à l'intérieur d'une partie profilée positive, au moins deux entailles s'étendant l'une à côté de l'autre (4) débouchent avec les mêmes portions de bord (4b, 4c) dans la rainure périphérique (2).

9. Pneumatique de véhicule selon l'une quelconque des revendications 1 à 8, **caractérisé en ce que** les canaux (5, 6a, 6b) sont formés par des rainures (5', 6', 6") qui sont réalisées au moins dans l'une des parois d'entaille (7) de l'entaille (4).

10. Pneumatique de véhicule selon la revendication 9, **caractérisé en ce que** dans les parois d'entaille (7) opposées l'une à l'autre, les rainures (6', 6") sont décalées les unes par rapport aux autres dans la direction d'étendue de l'entaille (4).

11. Pneumatique de véhicule selon l'une quelconque des revendications 1 à 10, **caractérisé en ce que** l'une des portions de bord (4b) s'étend jusqu'à une profondeur (T₁) qui représente 50 % à 90 % de la profondeur maximale (T) de l'entaille (4) et l'autre portion de bord (4c) s'étend jusqu'à la profondeur (T₂) qui représente 10 % à 60 % de la profondeur maximale (T) de l'entaille (4).
